(19) Europäisches Patentamt / European Patent Office / Office européen des brevets

(11) **EP 1 040 316 B1**

(12) **EUROPÄISCHE PATENTSCHRIFT**

(45) Veröffentlichungstag und Bekanntmachung des Hinweises auf die Patenterteilung:
**03.10.2007 Patentblatt 2007/40**

(21) Anmeldenummer: **98966209.3**

(22) Anmeldetag: **15.12.1998**

(51) Int Cl.:
**G01B 15/00** *(2006.01)*

(86) Internationale Anmeldenummer:
**PCT/DE1998/003674**

(87) Internationale Veröffentlichungsnummer:
**WO 1999/031463 (24.06.1999 Gazette 1999/25)**

(54) **ABSTANDSMESSVORRICHTUNG UND VERFAHREN ZUR BESTIMMUNG EINES ABSTANDES**

DISTANCE MEASURING DEVICE AND METHOD FOR DETERMINING A DISTANCE

DISPOSITIF DE MESURE DE DISTANCE ET PROCEDE POUR DETERMINER UNE DISTANCE

(84) Benannte Vertragsstaaten:
**DE ES FR GB IT**

(30) Priorität: **15.12.1997 DE 19755648**
**31.03.1998 DE 19814448**
**23.07.1998 DE 19833220**

(43) Veröffentlichungstag der Anmeldung:
**04.10.2000 Patentblatt 2000/40**

(73) Patentinhaber:
• **Astyx GmbH**
**85521 Ottobrunn (DE)**
• **Festo AG & Co.**
**73734 Esslingen (DE)**

(72) Erfinder:
• **TRUMMER, Günther**
**D-91083 Baiersdorf (DE)**
• **SEITZ, Armin**
**D-40625 Düsseldorf (DE)**

• **NEUGEBAUER, Alfred**
**D-70197 Stuttgart (DE)**
• **FÖRSTER, Karl**
**Commack, NY 11725 (US)**

(74) Vertreter: **Kunz, Herbert et al**
**HAMMONDS**
**Karl-Scharnagl-Ring 7**
**80539 München (DE)**

(56) Entgegenhaltungen:
**EP-A- 0 547 220      DE-A1- 3 236 939**
**US-A- 5 325 095      US-A- 5 596 325**

• **DISCLOSED ANONYMOUSLY: "Microwave Piston Position Detection" RESEARCH DISCLOSURE, Bd. 279, Juli 1987, Seite 435 XP002104705**
• **SKOLNIK: "Introduction to Radar Systems, Seiten 82 - 87" 1981, MCGRRAW-HILL INTERNATIONAL , NEW YORK**

**Beschreibung**

Die vorliegende Erfindung betrifft eine Abstandsmeßvorrichtung nach dem Oberbegriff des Anspruchs 1 sowie ein Verfahren zur Bestimmung eines Abstands.

Unter anderem werden herkömmliche Abstandsmeßvorrichtungen beispielsweise zur Detektion der Kolbenposition von fluidischen Linearantrieben bzw. pneumatische und hydraulische Zylinder eingesetzt. Die Kolbenpositionserfassung an Zylindern kann sowohl diskret, d. h. an diskreten Stellen, als auch kontinuierlich, d.h. ständig während des Betriebs, erfolgen.

Die diskrete Kolbenpositionsbestimmung wird in der Regel benötigt, um die Ausführung bzw. Beendigung einer Kolbenbewegung an eine Ablaufsteuerung (z.B. SPS) zurückzumelden, um somit beispielsweise den nächsten Ablaufschritt einleiten zu können.

Hierzu werden überwiegend magnetfeldempfindliche Sensoren bzw. Sensoreinrichtungen verwendet, welche das Magnetfeld eines Permanentmagneten, der sich an dem Zylinderkolben befindet, detektieren. Die dabei eingesetzten Sensoren werden extern an das Zylinderrohr des Kolbenzylinders montiert. Bewegt sich der Kolben in den Erfassungsbereich eines solchen Sensors, so erkennt dieser die Anwesenheit des Zylinderkolbens, durch das Zylinderrohr hindurch. Hierfür ist überwiegend die Verwendung von nicht-ferromagnetischer Werkstoffe erforderlich und beschränkt somit die konstruktiven Eigenschaften bzw. Anwendungen des Antriebes.

Soll hingegen eine andere Position detektiert werden, so muß der Sensor entsprechend mechanisch justiert werden. Für jede zusätzlich zu erfassende Position muß folglich ein weiterer Sensor montiert werden, und zwar mit den damit verbundenen zusätzlichen Material-, Montage-, Justage- und Installationskosten.

Ferner wird für diese extern angebauten Sensoren zusätzlicher Einbauraum benötigt. Damit die Zugänglichkeit und Robustheit des Sensors gewährleistet werden kann, ist häufig zusätzlicher konstruktiver Aufwand erforderlich.

Diese Art von Sensoren sind überwiegend als magnetfeldempfindliche Sensoren ausgeführt und sind als Reed-Schalter, magnetoresistive (MR), giant magnetoresistive (GMR), Hall-Schalter oder magnetinduktive Näherungsschalter bekannt.

Durch die Detektion des Magnetfeldes ist eine aufwendige Abstimmung des Magneten auf den Sensor bzw. auf die Sensoreinrichtung erforderlich. Zudem werden durch dieses Meßprinzip die möglichen Anwendungen durch störende statische und dynamische Magnetfelder (EMV, Feld eines nahen Zylinders) sowie das Temperaturverhalten des Sensors beschränkt.

Zur kontinuierlichen Kolbenpositionsmessung werden gewöhnlich Meßsysteme verwendet, die potentiometrisch, nach dem LVDT-Prinzip (Linear Variable Differential Transformer) oder nach dem Ultraschall-Prinzip arbeiten. Die Kolbenposition wird bei diesen Systemen kontinuierlich und überwiegend als analoges Spannungssignal ausgegeben. Als Ergänzung zu diesen Systemen sind auch inkrementale Wegmessungen bekannt. Diese Systeme werden beispielsweise durch die Kodierung der Kolbenstange realisiert und können somit nur zur relativen Wegmessung verwendet werden.

Sowohl die kontinuierliche als auch die diskrete Kolbenpositionsbestimmung können nicht bzw. nur mit erheblichem konstruktiven Aufwand und den dadurch verbundenen hohen Kosten in einen Zylinder integriert werden. Der erhebliche konstruktive Aufwand begründet sich dadurch, daß alle beschriebenen gängigen Sensorprinzipien auf die entsprechende Zylinderlänge angepaßt werden müssen, da sie einen zu kurzen Erfassungsbereich besitzen.

Gegenüber den allgemein bekannten Verfahren zur Abstandsmessung wird in der WO 93/01470 eine Abstandsbestimmung durch Messung der Resonanzfrequenz in einer Leitungsstruktur vorgenommen. Die Bestimmung des Abstandes kann hierbei lediglich an diskreten Punkten entsprechend der sich einstellenden Resonanzfrequenzen bestimmt werden. Nachteilig hieran ist jedoch, dass bei der Verwendung der Resonanzfrequenz des als Leitungsstruktur ausgebildeten Kolbens zur Entfernungsmessung eine kontinuierliche Abstandsbestimmung nicht realisierbar ist, da der Zylinderraum mit einer festen Kolbenstellung nur bei einer bestimmten Frequenz die Resonanzbedingung erfüllt, und somit immer nur für eine diskrete Position des Kolbens. Aus dem allgemeinen Lehrbuch "Skolnik, Introduction to Radar Systems, Second Edition, McGraw-Hill, International, 1981; Seiten 82 - 87" ist offenbart, wie sich die elektromagnetischen Grundlagen bei einem Dauerstrich - frequenzmodulierten Radarsystemen verhalten. Grundsätzlich wird in dem Lehrbuch festgestellt, dass ein einfaches Dauerstrichsignal nicht geeignet ist, eine Bereichsbestimmung durchzuführen. Allerdings wird in dem Lehrbuch offenbart, dass die Trägerfrequenz frequenzmoduliert sein kann, wobei zur Bereichsbestimmung die Frequenzunterschiede zwischen Übertragungssignal und Echosignal herangezogen wird.

Aufgabe der vorliegenden Erfindung ist es somit, eine Abstandsmeßvorrichtung und ein Verfahren zur Bestimmung des Abstands zu schaffen, welche bzw. welches die oben aufgeführten Nachteile überwindet und eine kontinuierliche und somit diskretisierbare Abstandsbestimmung, eine einfache Handhabung und vielseitige Einsatzmöglichkeiten erlaubt.

Diese Aufgabe wird mit den vorrichtungstechnischen Merkmalen des Anspruchs 1 und mit den verfahrenstechnischen Merkmalen des Anspruchs 16 gelöst.

Erfindungsgemäß wird eine Abstandsmeßvorrichtung und ein Verfahren zur Bestimmung eines Abstands zur Verfügung gestellt, wobei die Sensoreinrichtung eine Koppelsonde aufweist, die dazu dient, durch Abstrahlen und Empfangen von Wellen, einen bestimmten Abstand beispielsweise in einer Leitungsstruktur auszumessen, indem beispielsweise die Koppelsonde in die Leitungsstruktur integriert wird. Aufgrund dieser Integration der Koppelsonde wird erreicht, daß die Abstandsmeßvorrichtung klein gebaut und nahezu keine bzw. geringe Umbaumaßnahmen erforderlich machen. Der gesamte Aufbau der anmeldungsgemäßen Abstandsvorrichtung kann somit ein sauberes, glattes Design aufgrund des Wegfalls einer Montagemöglichkeit für externe Sensoreinrichtungen aufweisen, bzw. beeinflußt die äußere Erscheinung nicht. Mit der anmeldungsgemäßen Abstandsmeßvorrichtung wird eine Installationserspamis erreicht, da der vorgefertigte Zylinder lediglich ein Anschlußkabel zur Ansteuerung und Datenerfassung aufweist. Dadurch wird ferner eine Trennung der Sensoreinrichtung von der Auswerteelektronik erreicht, welche extern und von der Abstandsmeßvorrichtung abgesetzt angeordnet sein kann, und welche die Koppelsonde ansteuert. Ein Hochtemperatureinsatz, insbesondere ein Einsatz bis ca. 300°C bzw. 1000°C ist unproblematisch möglich. Gemäß dem anmeldungsgemäßen Verfahren wird die Länge der Leitungsstruktur bis zu einem Kurzschluß der ggfs. auch verschiebbar ist, gemessen. Das entsprechend dem anmeldunssgemäßen Verfahren bereitgestellte Sendesignal wird in eine Leitungsstruktur eingeleitet und von einem bestimmten Teil der Leistungsstruktur, vorzugsweise eines Kurzschlusses reflektiert. Dadurch wird die Messung des Abstandes zwischen dem von der Koppelsonde definierten Einspeisepunkt und dem vorbestimmten Teil der Leitungsstruktur durchgeführt. Der zu messende Abstand erfolgt hierbei durch eine Laufzeitmessung des Sendesignals.

Wird beispielsweise ein frequenzmoduliertes Sendesignal herangezogen, so ergibt sich der zu messende Abstand gemäß folgender Formel:

Abstand = n x Lichtgeschwindigkeit/2 x Frequenzhub;

mit n = 1, 2, 3 etc.

Aufgrund dieser Bestimmung des zu messenden Abstands wird eine Genauigkeit der halben Wellenlänge des Sendesignals erreicht. Das so durchgeführte Verfahren zur Bestimmung des Abstandes zu einem vorbestimmten. Teil der Leitungsstruktur kann als sogenanntes Suchverfahren bezeichnet werden.

Weitere vorteilhafte Ausgestaltungen des anmeldungsgemäßen Gegenstands sind Gegenstand der Unteransprüche.

Wird gemäß Anspruch 2 eine Koppelsonde bereitgestellt, die eine magnetische oder elektrische Einkopplung bzw. eine Schlitzkopplung ermöglicht, so agiert die Leitungsstruktur als Hohlleiter bzw. als eine Koaxialleitung.

Je nach angestrebtem Mode wird gemäß Anspruch 3 die Koppelsonde eine elektromagnetische Welle im Hochfrequenzbereich vorzugsweise zwischen 10 MHz bis 25 GHz einspeisen, um eine bestmögliche Signalauswertung zuzulassen. In Abhängigkeit von den Dimensionen bzw. Ausmaßen der Leitungsstruktur, können untere Grenzfrequenzen verwendet werden, ab denen die nächsthöhere Mode ausbreitungsfähig ist. Die Praxis hat gezeigt, daß insbesondere bei der Anwendung hinsichtlich eines Zylinderkolbens gemäß Anspruch 4 eine monomodige Ausbreitung von Vorteil ist, vorzugsweise im TEM-Mode. In diesem Mode ist insbesondere als nächsthöhere Mode der TE11-Feldtyp ausbreitungsfähig. Die sich daraus ergebenden Grenzfrequenzen sind beispielsweise bei einem Kolberizylin-der mit Zylinderdurchmesser D und dem Kolbenstangendurchmesser d für D = 10mm und d = 4mm ungefähr 14 GHz für eine untere Grenzfrequenz des TE11-Modes bzw. für D = 25mm und d = 10mm ca. 5,5 GHz für eine untere Grenzfrequenz des TE11-Modes.

In diesem Zusammenhang sei erwähnt, daß der TE11-Mode jedoch bei dem Zylinderkolben durch zweifache, insbesondere gerade Achsensymmetrie sowohl der Feldanregung als auch des Feldraumes unterdrückt werden. Aufgrund dieser Achsensymmetrie kann die Breite des Frequenzbereiches, in dem keine höheren Feldtypen ausbreitungsfähig sind, ungefähr verdoppelt werden. Der nächsthöhere, ausbreitungsfähige Mode in dem Beispiel ist dann der TE21-Mode. Hierbei ist allerdings zu beachten, daß bei Zylindern mit durchgehender Kolbenstange neben den Feldtypen des Koaxialleiters auch Feldtypen in Rundhohlleiter auftreten. Die Grenzfrequenz dieses Feldtyps im Rundhohlleiter ist für alle Zylinder größer als die entsprechenden Grenzwerte des Feldtypen im zylindrischen Koaxialleiter. Wird beispielsweise eine Betriebsfrequenz eingesetzt, bei der nur der TEM-Feldtyp im Koaxialleiter ausbreitungsfähig ist, so sind im gesamten Zylinder keine Feldtypen des Hohlleiters ausbreitungsfähig.

Handelt es sich gemäß Anspruch 5 bei der Einkopplung um eine singuläre also unsymmetrische Einkopplung, so ist in diesem Beispiel bei einem koaxialen Zylinder die TE11-Mode ausbreitungsfähig. Werden dagegen mehrere Einspeisepunkte mit axialsymmetrischer Einkopplung verwendet, so wird beispielsweise beim koaxialen Zylinder die TE11 Mode unterdrückt, wobei bei Verwendung von zwei 180° versetzte Kop-pelsonden beide Koppelsonden von einem Einspeisepunkt durch Aufspaltung des HF-Signals über einen 3dB-Leistungskoppler bzw. - Leistungsteiler, z.B. Wilkinson versorgt werden, bei vier um 90° versetzte Koppelsonden zwei 3dB-Koppler verwendet und bei acht um 45° versetzte Koppelsonden vier 3dB-Koppler versorgt werden. Der Vorteil der axialsymmetrischen Einspeisung besteht in der Unterdrückung des nächsthöheren Modes und somit in der Möglichkeit eine höhere Sendefrequenz verwenden zu können. Durch die höhere Sendefrequenz und damit höhere Bandbreite läßt sich ferner eine höhere Meßgenauigkeit erzielen.

Wird gemäß Anspruch 6 eine Abstandsmeßvorrichtung geschaffen, die ein Anpaßnetzwerk aufweist, so wird der Vorteil erzielt, daß mit diesem Anpaßnetzwerk, vorzugsweise Hochfrequenz-Anpaßnetzwerk die Frequenzbandbreite der Sonde erhöht wird und so das Abstrahlen bzw. Empfangen eines frequenzmodulierten Sendesignals möglich ist. Mit einem derartigen Anpaßnetzwerk wird die Voraussetzung geschaffen, über den Suchvorgang bzw. den dazugehörigen Suchalgorithmus die Entfernungsbestimmung mit einer hohen Genauigkeit bestimmen zu können. Vorzugsweise sind sowohl Koppelsonde als auch Anpaßnetzwerk als passive Leistungsstrukturen vorgesehen, die in Form einer dünnen Goldschicht, beispielsweise 15 mm, vorzugsweise galvanisch hergestellt werden. Aus rein prak-tischen Gründen kann es auch von Vorteil sein, die zur Axialachse unsymmetrische, singuläre Einkopplung vorzusehen und den Vorteil der symmetrischen Einkopplung der höheren Sendefrequenz und damit Meßgenauigkeit aufzugeben. Dies hat den Vorteil, daß für nahezu alle gängigen Leitungsstrukturen, insbesondere Kolbenzylindergrößen, eine identische Koppelsonde einsetzbar ist.

Die symmetrische Einkopplung gemäß Anspruch 8 mit mehreren Koppelsonden besitzt den weiteren Vorteil, daß Empfänger und Sender bereits antennenseitig getrennt werden können. Hierzu werden beispielswseise bei vier Koppelsonden jeweils zwei gegenüber liegende Koppelsonden zum Senden und Empfangen verwendet. Führt man keine Trennung von Sende- und Empfangszweig durch, dann wird neben der Koppelsonde auch die Leitungsstruktur des Senders für den Empfänger bis zur Trennung durch den Koppler benutzt. Da die Koppelsonde eine Einfügungsdämpfung besitzt, hat dies zur Folge, daß ein Teil des Sendesignals an der Koppelsonde reflektiert wird und damit in den Empfänger gelangt. Dort überlagert sich der reflektierte Anteil des Sendesignals mit dem eigentlichen Empfangssignals und verschlechtert die Meßgenauigkeit. Dies wird bei der Trennung von Sende- und Empfangszweig bereits auf Antennenseite vermieden.

Die Trennung in eine Sende- und Empfangsantenne hat den weiteren Vorteil, daß gemäß Anspruch 9 jeweils unterschiedliche Ausführungsformen, d.h. elektrische oder magnetische Sonden oder eine Schlitzkopplung, als Sende bzw. Empfangsantennen verwendet bzw. kombiniert werden können. Damit läßt sich eine direkte Überkopplung des Sendesignals in den Empfänger und somit eine Verbesserung der Signalqualität erreichen.

Ist vorzugsweise gemäß Anspruch 11 die in einen Sende- und Empfangszweig aufgeteilte Hochfrequenzelektronik der Sensoreinrichtung, deren Empfangszweig aus einem Mischer und/oder mindestens vier Hochfrequenz-Dioden besteht, vorgesehen, so kann aufgrund der Anzahl der Hochfrequenz-Dioden sowohl die Richtungserkennung einer Bewegung eines vorbestimmten Teils der Leitungsstruktur als auch eine eindeutige Entfernungsänderung dieses Teils ermittelt werden.

Wird gemäß Anspruch 12 eine geschlossene Regelschleife vorgesehen, so kann beispielsweise eine aus dem Sendezweig heruntergeteilte Frequenz beispielsweise des Voltage-Controlled-Oszillators (VCO) nicht direkt als Ergebnisgröße herangezogen werden, sondern in einer Frequenz- und Phasenregelung eingesetzt werden. Auf diese Weise ist eine direkte und vereinfachte insbesondere schnelle Verarbeitung der Signale und Auswertung zur Bestimmung des Abstandes gewähr-leistet.

Gemäß Anspruch 13 kann beispielsweise diese dynamische Frequenzregelung über ein Phase-Lock-Loop (PLL) gereglt werden, welcher aus mindestens einem Frequenzteiler, einem Phasendiskriminator und einem Tiefpaßfilter realisiert ist, wobei die Sollfrequenz über ein Direct-Digital-Synthesizer vorgegeben wird.

Enthält der Empfangszweig gemäß Anspruch 15 einen IQ-Detektor (Inphase Quatratur Detektor), so ist ebenfalls eine besondere Anordnung gegeben, mit der eine Richtungserkennung einer Bewegung eines vorbestimmten Teils der Leitungsstruktur ermöglicht wird.

Eine vorteilhafte, vereinfachte Ausführungsform ergibt sich für den Suchmode dann, wenn sowohl der Frequenzhub des Oszillators als auch die Länge der Verzögerunasleitung so ausgelegt werden, daß sie einer bestimmten, fest vorgegebenen Entfernung der Koppelsonde zu einem Punkt in der Leitungstrukrur, beispielsweise in einem Kolben, entsprechen, d.h. wenn gemäß Anspruch 19 ein Synchronisationspunkt in der Leitungsstrukrur voreingestellt ist. Wird der Synchronisationspunkt beispielsweise von einem Zylinderkolben überfahren, dann synchronisiert sich der Sensor sofort auf, schaltet in den Trackmode um und übernimmt die hochdynamische Positionsbestimmung des Kolbens.

Wird darüberhinaus der Synchronisationspunkt relativ weit entfernt von der Koppelsonde gewählt, dann hat dieses Verfahren den Vorteil, daß sowohl die Verzögerungsleitung als kurzes Stück Leitung, z.B. in gedruckter Form auf der Rückseite der Koppelsonde ausgeführt und der Frequenzhub klein gehalten werden kann.

Weitere vorteilhafte Ausführungsformen sind Gegenstand der übrigen Unteransprüche.

Unter Bezugnahme auf die beigefügten Zeichnungen ist ein bevorzugtes Ausführungsbeispiel insbesondere für die Verwendung in einem Zylinderkolben dargestellt.

Fig. 1      zeigt eine seitliche Schnittzeichnung einer Integration der Abstandsmeßvorrichtung in einen Zylinderkolben;

Fig. 2      zeigt eine Frontansicht der erfindungsgemäßen Abstandsmeßvorrichtung;

Fig. 3      zeigt eine Frequenzverteilungskurve mit und ohne Anpaßnetzwerk gemäß einer Ausführungsform der vorliegenden Erfindung;

Fig. 4    zeigt ein Blockdiagramm der Hochfrequenz-Elektronik mit einem ersten Empfangszweig zur Bestimmung des Abstandes;

Fig. 5a    zeigt eine weitere Ausführungsform einer Hochfrequenz-Elektronik zur Richtungserkennung eines sich bewegenden vorbestimmten Teils in der Leitungsstruktur;

Fig. 5b    zeigt eine weitere Ausführungsform einer Hochfrequenz-Elektronik zur Richtungserkennung eines sich bewegenden vorbestimmten Teils in der Leitungsstruktur;

Fig. 6    zeigt eine weitere Ausführungsform einer Hochfrequenz-Elektronik zur Bestimmung des Abstandes;

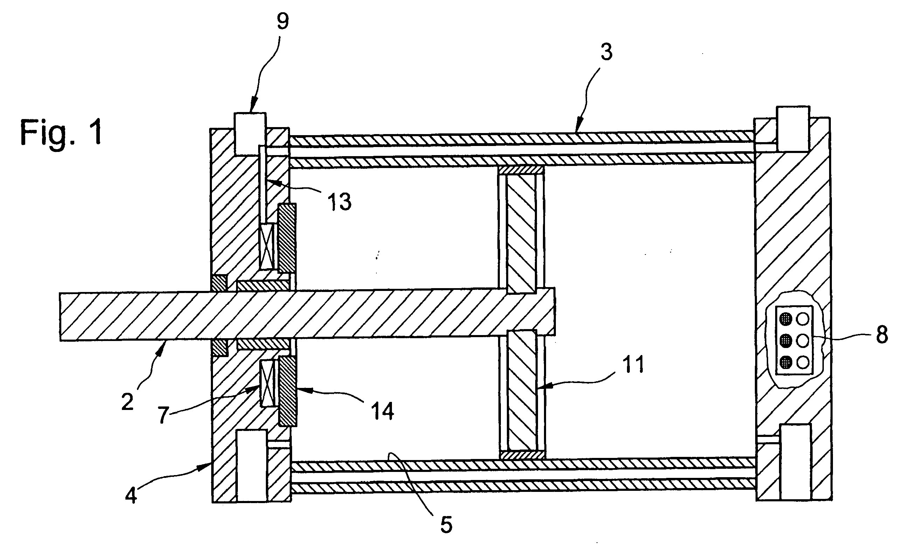

Fig. 1 zeigt ein Anwendungsbeispiel der anmeldungsgemäßen Abstandsmeßvorrichtung wie sie beispielsweise in einem Kolbenstangenzylinder, der beispielsweise bei einem linearen Antrieb sowohl hydraulisch als auch pneumatisch betrieben werden kann, einsetzbar ist. Die Sensoreinrichtung ist axialsymmetrisch um die Kolbenstange 2 in einem Lagerdeckel 4 für die Kolbenstange 2 angeordnet. Wie in Fig. 1 zu erkennen ist, wird in dieser Ausführungsform eine Leitungsstruktur durch die Kolbenstange 2, den Kolben 11 sowie dem Zylindermantel 3 und dem Lagerdeckel 4 definiert. Die in der Sensoreinrichtung vorgesehene Koppelsonde 7 ist in den Lagerdeckel 4 integriert und in Richtung der Leitungsstruktur 5 gerichtet. Ferner sind in dem Lagerdeckel 4 Kanäle 13 vorgesehen, die für die elektrischen Zuleitungen der Sensoreinrichtung integriert sind und an einer in der Peripherie des Lagerdeckels 4 vorgesehenen Steckverbindung 9 en-det.

Das Zylinderrohr und somit der Kolbenstangenzylinder selbst kann vielfältig ausgestaltet sein. Wesentlich ist jedoch, daß eine Art Leitungsstruktur 5 bereitgestellt wird, die eine Reflektion des Sendesignals ermöglicht. Die Reflektion im Ausführungsbeispiel gemäß Fig. 1 wird beispielsweise durch den Kolben 11, der ebenso als Kurzschluß fungiert, ermöglicht. Zum Schutz der Sensoreinrichtung bzw. Koppelsonde 7 kann beispielsweise auch ein Einlagenpuffer 14 zur Dämpfung des Aufpralls des Kolbens auf den Lagerdeckel vor-gesehen sein. In dem Deckel 5 können beispielsweise sowohl ein Bedienfeld als auch ein Anzeigefeld 8 vorhanden sein, mit dem einzelne Schaltpunkte angezeigt bzw. eingestellt werden können.

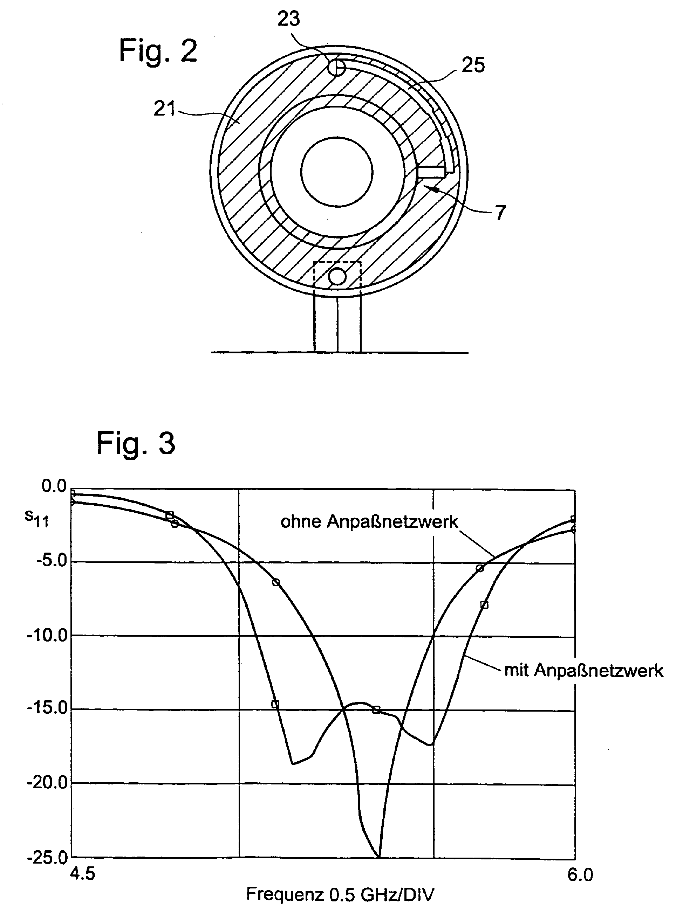

In Fig. 2 ist eine Frontansicht des Lagerdeckels 4 dargestellt, die die in der anmeldungsgemäßen Abstandsvorrichtung enthaltene Sensoreinrichtung zeigt. In dieser in Fig.2 dargestellten Ausführungsform ist die Verwendung für einen kreisförmigen Zylinderkolben konzipiert worden. Die Sensoreinrichtung weist z.B. eine mehrlagige Keramikscheibe 21 auf, auf deren Vorderseite die Koppelsonde 7 ausgebildet ist und deren Rückseite als Trägersubstrat für die Elektronik-Bauteile dient. Die Durchkontaktierung 23 der Sende-Empfangsleitung zur Koppelsonde 7 erfolgt vorzugsweise galvanisch oder über eine Apperturkopplung. Um einen größeren Frequenzbereich durchstimmen zu können, ist ein Anpaßnetzwerk 25 vorgesehen, welches zwischen dem Einspeisepunkrt, der durch die Durchkontaktierung 23 vorgegeben ist, und der Koppelsonde 7 angeordnet ist.

Fig. 3 zeigt deutlich, welchen Einfluß das Anpaßnetzwerk auf eine Frequenzverteilung haben kann. Deutlich ist zu erkennen, daß sich der Bereich der durchstimmbaren Frequenzen, d. h. die Halbwertsbreite, mit Anpaßnetzwerk verdoppelt. An dieser Stelle sei bereits darauf hingewiesen, daß die Keramikscheibe nicht generell um die Kolbenstange verlaufen muß, sondern auch aus einem kleinen, kreisrunden Substrat besteht, welches unsymmetrisch an einer Stelle der Kolbenstange eingebracht ist. Generell können aber auch die Koppelsonde aus mehreren beispielsweise aus zwei Kontaktierungen bestehen und einem Stück gedruckter Leitung auf der Vorderseite des Substrats, welches die beiden Durchkontak-tierungen miteinander verbindet.

Hierbei besteht die einfachste Ausführungsform einer magnetischen Koppelsonde aus einem Stück Koaxialleitung, bei höheren Frequenzen vorzugsweise einer sogenannten Semirisid-Leitung. Die Koaxialleitung wird mechanisch durch den Lagerdeckel geführt. Der offene Innenleiter wird anschließend über eine kurze Schleife in der Luft geführt und am Lagerdeckel aufgelöst und somit kurzgeschlossen.

Ähnlich der elektrischen Sonde kann die magnetische auch als gedruckte Streifenleitung ausgeführt werden. Hierbei werden die Leitungsführungsen bezogen auf die Kolbenstangen sternförmig von innen nach außen angeordnet. Die Durchkontaktierung verbindet wiederum die Elektronik auf der Rückseite des Substrates mit der gedruckten Streifenleitung auf der Vorderseite. Am inneren Ende der gedruckten Streifenleitung befindet sich die Durchkontaktierung, am äußeren Ende ist die Leitung mit dem Zylindergehäuse kurzgeschlossen. Weitere Ausführungsformen, z.B. die über Schlitzkopplung sind denkbar. Ansonsten sind alle Variationsmöglichkeiten bezüglich der koaxialen Symmetrie anwendbar wie bei der elektrischen Koppelsonde.

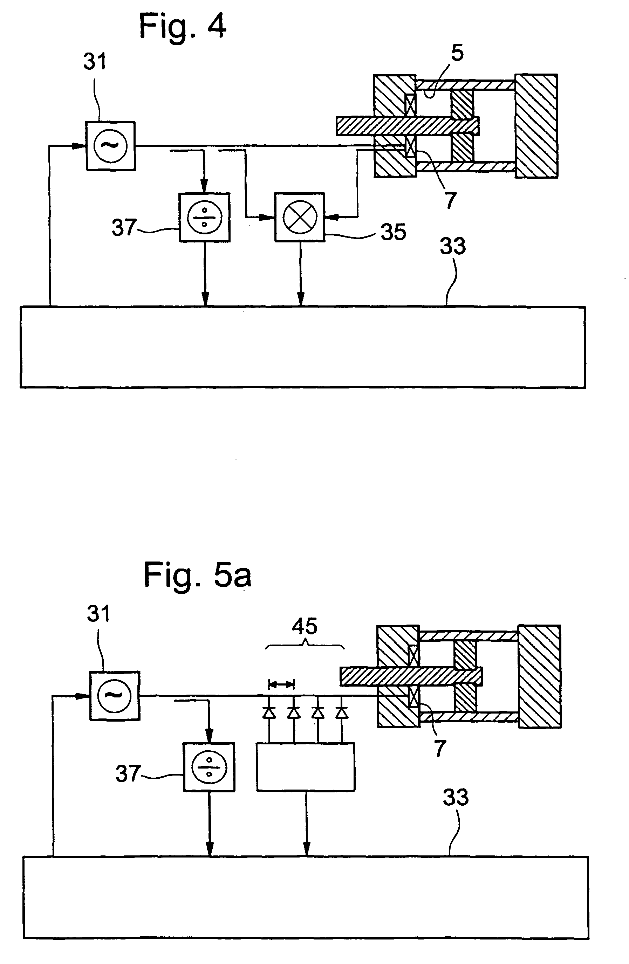

In Fig. 4 ist die Auswerteelektronik zusammen mit der Hochfrequenz-Elektronik dargestellt. Hierbei ist zu erkennen, daß die Koppelsonde 7 von einem Oszillator 31 vorzugsweise einem spannungsgesteuerten Oszillator (VCO) angesteuert wird, wobei die Abstimmspannung durch eine Rampensteuerung aus der Steuerungs- und Auswerteelektronik 33 hervorgerufen wird. Das Sendesignal wird über eine magnetische oder elektrische Koppelsonde in die Leitungsstruktur eingespeist (Sendezweig). In einem ersten Schritt wird der absolute Abstand zwischen absolutem Einspeisepunkt und Kolben gemessen. Hierbei wird eine Laufzeitmessung des frequenzmodulierten Sendesignals ausgewertet. Es ergibt sich gemäß Gleichung 1 dargestellter Zusammenhang.

Die Auswertung des empfangenen und am Mischer 35 in der Frequenz herabgesetzten Signals liefert den absoluten Abstand zwischen Einspeisepunkt und Position des Kolbens, bzw. eines vorbestimmten Teils in einer Leitungsstruktur, mit einer Genauigkeit mindestens der halben Wellenlänge des Sendesignals. Dieses Verfahren wird als Suchverfahren bezeichnet. Nachdem die Kolbenposition mit hinreichender Genauigkeit eindeutig ermittelt wurde, wird in den sogenannten Track-Mode umgeschaltet. Hierbei wird ein Dauerstrichsignal, z. B. bei 5 GHz, in den Zylinder eingekoppelt. Aufgrund der Einkopplung bildet sich eine stehende Welle aus, deren Verschiebung durch die Bewegung des Kolbens erfolgt und über eine Phasenauswertung, des in der Frequenz herabgesetzten Signals ermittelt wird. Dieses Verfahren ermöglicht die Bestimmung der Entfernung zum Kolben mit der Genauigkeit im Submillimeter-Bereich. Die generell in einen Sende- und Empfangszweig aufgegliederte Hochfrequenz-Elektronik besteht entsprechend Bild 4 aus einem spannungsgesteuerten Oszillator (VCO) und einem oder mehreren Frequenzteilern. Der Oszillator wird über die Abstimmspannung einer Varaktordiode in der Frequenz z. B. zwischen 4 und 6 GHz durchgestimmt. Ein Teil der Energie wird resistiv aus dem Sendezweig ausgekoppelt und über Frequenzteiler heruntergeteilt, z. B. auf 30 MHz, so dass die Sendefrequenz zu jedem Zeitpunkt bekannt ist. Der Empfänger besteht aus einem Mischer 35, der das Empfangssignal durch Mischung mit einem Sendesignal in einem Frequenzbereich bis zu einigen wenigen KHz-Signalen transformiert. Da während der Track-Phase nur ein Dauerstrichsignal gesendet wird, muss es sich bei dem Mischer um einen gleichstromgekoppelte Mischer handeln.

In Fig. 5a ist anstelle des Mischers gemäß Figur 4 eine Anordnung aus Detektordioden 45 vorgesehen. Um sowohl die Richtungserkennung als auch eine eindeutige Entfernungsänderung der Kolbenposition durch Verschiebung der stehenden Welle feststellen zu können, müssen mindestens vier Detektordioden verwendet werden, die entsprechend Gleichung 2 beabstandet sein müssen:

$$\text{Abstand der Dioden} = n\ (\text{Wellenlänge}/2) + \text{Wellenlänge}/16 \text{ mit } n = 1, 2, \ldots (2)$$

Zur Erläuterung der Entfernungsbestimmung wird darauf hingewiesen, dass es zwei Phasen der Signalauswertung gibt. Nach dem Einschalten des Sensors oder nach einer Betriebsstörung, beispielsweise durch einen Spannungsausfall, wird im so genannten Suchmodus eine absolute Entfernungsbestimmung zum Zylinderkolben bzw. zum vorbestimmten Teil in der Leitungsstruktur durchgeführt.

Hierbei wird der Oszillator (VCO) in seiner Frequenz, z.B. innerhalb einer Bandbreite von 1.5 GHz, moduliert. Die Entfernung Koppelsonde zum Zylinderkolben lässt sich dann durch Berechnung einer FFT (Fast-Fourier-Transformation) mit anschließender Berechnung der DFT (Discret-Fourier-Transformation) des Videosignals mit einer Genauigkeit der Entfernungsbestimmung der halben Wellenlänge oder über eine einfache Nullstellen- oder Minimum- oder Maximumzählung bestimmen.

Hierbei gilt:

$$\text{Zylinderlänge} = n \times \text{Lichtgeschwindigkeit}/2 \times \text{Frequenzhub}$$

Dieser Gleichung ist leicht zu entnehmen, dass eine interne Zylinderlänge 0 (Kolben befindet sich im Anschlag am Einspeisepunkt) einen unendlich großen Frequenzhub erfordern würde. Deshalb wird zwischen Empfänger und Einspeisepunkt eine 50 Q Verzögerungsleitung benötigt. Die Länge der Verzögerungsleitung begrenzt auch bei Kolbenanschlag den erforderlichen Frequenzhub auf eine realisierbare Größe von z.B. 20 % der Sendefrequenz.

Die Frequenz des VCOs wird hierbei in der einfachsten Ausführungsform entsprechend Figur 4 statisch über einen Mikrokontroller oder diskrete Elektronik geregelt. Dazu wird ein Teil des Sendesignals z.B. resistiv aus dem Sendezweig ausgekoppelt und wahlweise über mindestens einen Frequenzteiler 37 in der Frequenz soweit heruntergesetzt, dass die sich dann ergebende Frequenz mittels eines einfachen digitalen Zählers bestimmt werden kann. Die Abweichung zwischen Soll- und IST-Frequenz des Oszillators wird anschließend durch Änderung der Abstimmspannung am Oszillator nachgeregelt, indem z.B. über Digital/Analogwandlung der entsprechende Spannungswert ausgegeben wird. Dieses Verfahren zur Bestimmung der Frequenzregelung wird "statische Frequenzregelung" genannt.

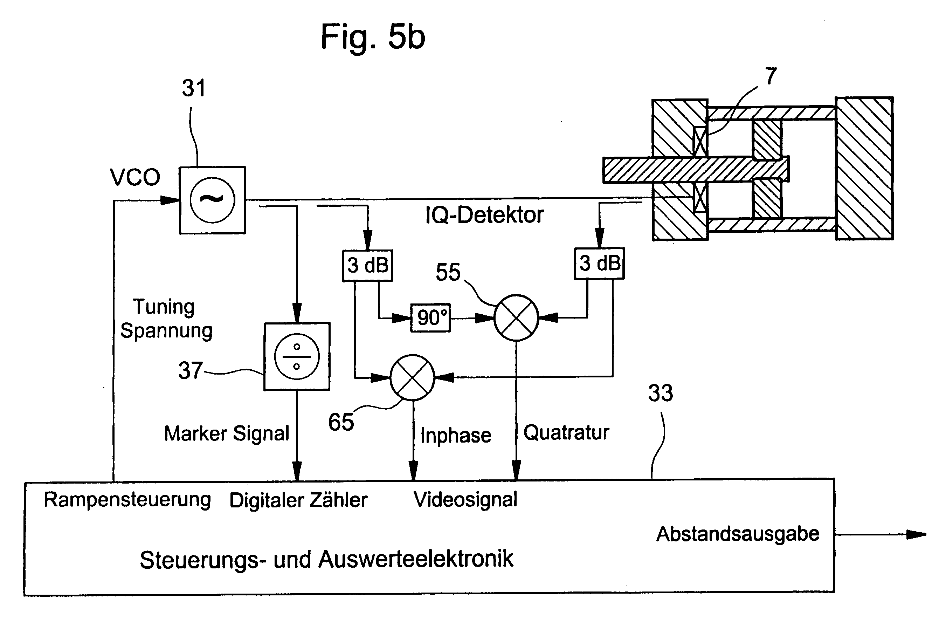

In Fig. 5b ist eine weitere Möglichkeit gezeigt, während der Abstandsbestimmung auch eine Richtungserkennung durchführen zu können. Anstelle eines Mischers 35 gemäß Figur 4 und einer Anordnung aus Detektordioden 45 gemäß Figur 5a wird hier als Empfangszweig ein IQ-Detektor eingesetzt. Der IQ-Detektor besteht aus 2 Mischern 55 und 65, deren z.B. Lokaloszillatoren einen Phasenversatz von 90° besitzen. Somit erhält man zwei Empfangssignale, Inphase (sinus-Anteil) und Quatratur (cosinus-Anteil). Aufgrund des Verhältnisses beider zueinander, ist es dann möglich, die Vorwärtsbewegung von der Rückwärtsbewegung des Kolbens zu unterscheiden (Richtungserkennung). Das Verfahren wird vorzugsweise im Track-Mode ausgenutzt, wenn ein CW-Signal (bei einer Frequenz) abgestrahlt wird. Die 90° Leitungslängenunterschiede zwischen den beiden Lokaloszillatoren gelten nur bei einer festen Sendefrequenz. Diese muß dann auch im Track-Mode eingehalten werden.

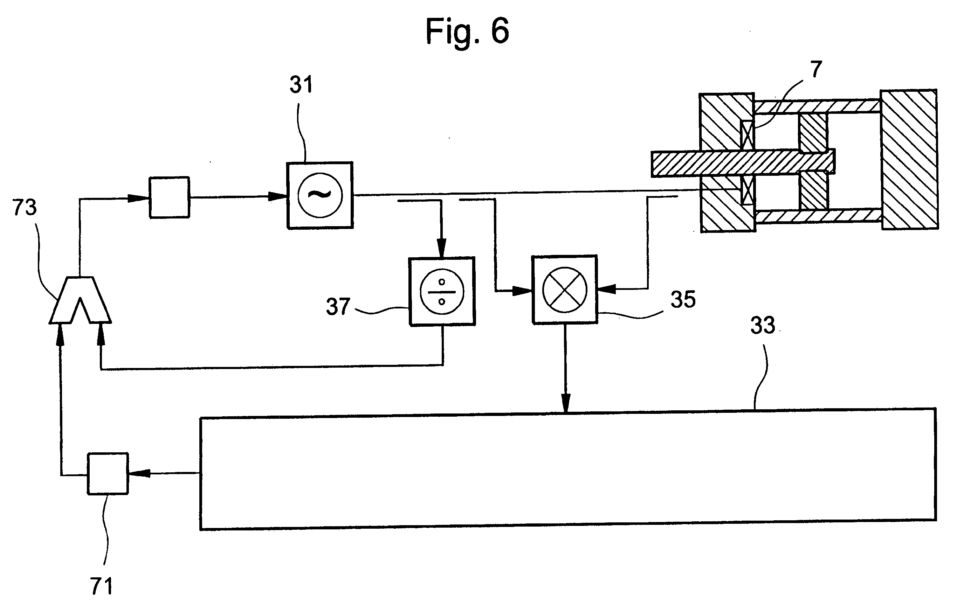

In Fig. 6 ist die dynamische Frequenzregelung gezeigt, deren wesentlicher Unterschied darin besteht, daß die über den Frequenzteiler 37 heruntergeteilte VCO-Frequenz nicht direkt als Ergebnisgröße dient, sondern in einer Frequenz- und Phasenregelung verwendet wird und somit einen geschlossenen Regelkreis bildet. Durch z. B. einen Mikrocontroller wird ein direkter digitaler Synthesizer (DDS) 71 auf eine Frequenz eingestellt, die als Führungsgröße über ein Phasendiskriminator 73, welcher das aus dem digitalen Synthesizer 71 ausgehende Signal und das heruntergeteilte Frequenzsignal diskriminiert, in die geschlossene Regelschleife eingeht. Nach Bestimmung der absoluten Entfernung mit einer der voran genannten Regelungen schaltet der Sensor in den Track-Mode, um die Genauigkeit der Entfernungsmessung zu verbessern und die hochdynamische Verfolgung des Kolbens im Betrieb zu ermöglichen.

Im Track-Mode wird nun ein CW-Signal gesendet. Es bildet sich dann im Zylinder eine stehende Welle, deren Änderung im Empfänger durch den zuvor beschriebenen IQ-Detektor bzw. eine Anordnung von Detektodioden 45 bzw. des Mischers 35 ins Basisband, beispielsweise von 0 bis 100 kHz, herabgesetzt und anschließend durch die nachgeschaltete Elektronik ausgewertet wird.

Wählt man die Sendefrequenz im Track-Mode so niedrig, daß die halbe Wellenlänge gerade der maximalen Zylinderlänge entspricht, dann kann über die einfache CW Messung eine eindeutige Entfernungsbestimmung durchgeführt und auf den Searchmode bzw. Suchmode ganz verzichtet werden.

Dieses Verfahren kann besonders vorteilhaft bei langhubigen Zylindern eingesetzt werden. Es ist nur dann problematisch, wenn eine große Anzahl von unterschiedlichen Zylindergrößen betrachtet wird und die Sendefrequenz für alle Zylindertypen beibehalten werden soll (universell einsetzbare Sensoren), insbesondere da die Sendefrequenz, um eine eindeutige Entfernungsbestimmung durchführen zu können, entsprechend dem längsten Zylinder ausgewählt werden muß. Für sehr kleine Zylinder wird die Entfernungsbestimmung dann sehr ungenau.

Durch den verwendeten Mikrokontroller und der Zylinderkonstruktion ergibt sich eine große Vielzahl der möglichen elektrischen und mechanischen Ausführungen sowie die Implementierung von Zusatzfunktionen.

So kann für die Anordnung der elektrischen Anschlußverbindungen jede beliebige Stelle der feststehenden Zylinderteile verwendet werden. Die interne Zuführung erfolgt dann über entsprechende Kanäle des Gehäuseprofils. Dies gilt auch für eine Bedienerschnittstelle, die zur Anzeige und Einstellung der Schaltpunkte des Zylinders teilweise benötigt. Diese Schnittstelle kann aus LED, LCD Anzeigen bestehen und eine Einstellmöglichkeit der Schaltpunkte über Teach-In-Tasten bzw. Potentiometer bieten.

Ferner kann dieses Bedienfeld auch vom Zylinder abgesetzt sein, wodurch eine Verbesserung der Zugänglichkeit erreicht wird.

Zusatzfunktionen, welche dieses in der Abstandsvorrichtunj eingesetzte Sensorsystem gegenüber dem Stand der Technik zusätzlich erlaubt, sind zum Beispiel die Fehler- und Selbstdiagnose, freie Konfiguration der Ausgänge, zusätzliche direkte Steuerung weiterer Komponenten wie z.B. zuschaltbare Drosseln bzw. Regler, sowie eines Busanschlußknoten. Unter freier Ausgangskonfiguration ist zu verstehen, daß beispielsweise jeder Schaltausgang als Fehlersignal, zur externen Kabelbruchdetektion, als Serviceintervallanzeige oder als Analogausgang mit frei definierbarer Kennlinie eingerichtet werden kann.

Die elektrische Verbindung ist vorzugsweise steckbar, wobei den Spannungsversorgungsleitungen ein zusätzliches, aufmoduliertes, bidirektionales Kommunikationssignal überlagert werden kann. Hierdurch ist ohne zusätzlichen Aufwand eine Parametrierung bzw. Einrichtung mit einem externen Gerät möglich. Neben dieser Anschlußtechnik ist auch eine reine Busanschlußtechnik denkbar, die idealerweise bereits über die pneumatischen Anschlüsse geführt bzw. integriert ist. Zudem ist eine drahtlose Signalübertragung möglich.

Um den Einsatzbereich, insbesondere im Hoch- und Tieftemperaturbereich des Zylinders deutlich zu erweitern, ist eine abgesetzte, d.h. nicht integrierte Auswerteelektronik möglich. Die Verbindung zwischen Koppelsonde und Auswerteelektronik erfolgt über Streifenleiter oder Hochfrequenz-Koaxialleitungen. Da sich dann am bzw. im Zylinder keine aktiven elektronischen Komponenten mehr befinden, sind die Anwendungen im Hochtemperaturbereich auf einfache Weise möglich.

Das anwendungsgemäße Verfahren besitzt noch einen weiteren Vorteil im Bereich Füllstandsmessung, insbesondere von Trennschichten. Befinden sich mehrere Flüssigkeiten mit unterschiedlichen Dielektrizitätskonstanten in der Leitungsstruktur, beispielsweise eines Tauchrohres eines Tanks, dann ist die Bestimmung der Grenzschicht zwischen den Flüssigkeiten möglich.

Eine häufige Anwendung hierfür findet sich beispielsweise in Öltanks. Im Laufe der Zeit bildet sich Kondenswasser am Boden der Tanks welches abgesaugt werden soll, ohne den Tank leeren zu müssen. Hierbei schwimmt das Öl mit einer Dielektrizitätskonstante von ca. 2 bis 10 auf der Wasseroberfläche mit einer Dielektrizitätskonstante von ca. 88.

**Patentansprüche**

1.  Abstandsmeßvorrichtung mit einer Sensoreinrichtung und einer Auswerteelektronik, wobei die Sensoreinrichtung zumindest eine Koppelsonde zur Einspeisung eines Sendesignals in eine Leitungsstruktur aufweist, **dadurch gekennzeichnet, dass** die Koppelsonde ein frequenzmoduliertes Hochfrequenz-Dauerstrichsignal einspeist, um kontinuierlich den Abstand zu bestimmen, wobei die Messung des Abstandes zwischen dem von der Koppelsonde definierten Einspeisepunkt und einem vorbestimmten Teil der Leitungsstruktur durch eine Laufzeitmessung des Sendesignals erfolgt.

2.  Abstandsmeßvorrichtung nach Anspruch 1, **dadurch gekennzeichnet, dass** die Koppelsonde eine magnetische oder elektrische Einkoppelung oder eine Schlitzkoppelung in einen Hohlleiter oder eine Koaxialleitung als Leitungsstruktur ermöglicht.

3.  Abstandsmeßvorrichtung nach Anspruch 1 oder 2, **dadurch gekennzeichnet, dass** über die Koppelsonde eine elektromagnetische Welle im Hochfrequenzbereich zwischen 10 MHz bis 25 GHz eingespeist wird.

4.  Abstandsmeßvoruchtung nach Anspruch 3, **dadurch gekennzeichnet, dass** die eingekoppelte elektromagnetische Welle eine monomodige Ausbreitung aufweist, vorzugsweise im TEM-Mode bei koaxialen Strukturen.

5.  Abstandsmeßvorrichtung nach einem der Ansprüche 1 bis 4, **dadurch gekennzeichnet, dass** es sich bei der Einkoppelung um eine singuläre Einkopplung und/oder eine axialsymmetrische Einkopplung mit mehreren Koppelsonden handelt.

6.  Abstandsmeßvorrichtung nach einem der Ansprüche 1 bis 5, **dadurch gekennzeichnet, dass** ein Anpassnetzwerk vorgesehen ist.

7.  Abstandsmeßvorrichtung nach einem der Ansprüche 1 bis 6, **dadurch gekennzeichnet, dass** die Sensoreinrichtung eine Hochfrequenz-Elektronik mit einem Sende- und Empfangszweig aufweist.

8.  Abstandsmeßvorrichtung nach einem der Ansprüche 1 bis 7, **dadurch gekennzeichnet, dass** mehrere Koppelsonden vorgesehen sind, wobei je die Hälfte der Koppelsonden für Sender bzw. Empfänger vorgesehen sind.

9.  Abstandsmeßvorrichtung, nach Anspruch 8, **dadurch gekennzeichnet, dass** für die für den Sender vorgesehene Senderantenne und für die für den Empfänger vorgesehene Empfängerantenne unterschiedliche Typen der Koppelsonden verwendet werden.

10. Abstandsmeßvorrichtung nach einem der Ansprüche 7 bis 9, **dadurch gekennzeichnet, dass** der Sendezweig aus einem Oszillator, vorzugsweise einem Voltage Controlled Oszillator (VCO) besteht.

11. Abstandsmeßvorrichtung nach einem der Ansprüche 7 bis 10, **dadurch gekennzeichnet, dass** der Empfangszweig aus einem Mischer oder mindestens vier Hochfrequenz-Dioden besteht.

12. Abstandsmeßvorrichtung nach Anspruch 10, **dadurch gekennzeichnet, dass** eine geschlossene Regelschleife vorgesehen ist.

13. Abstandsmeßvorrichtung nach Anspruch 12, **dadurch gekennzeichnet, dass** die Regelschleife ein Phase Locked Loop (PLL) ist und aus mindestens einem Frequenzteiler, einem Phasendiskriminator und einem Tiefpassfilter besteht und die Sollfrequenz über einen DDS (Direct Digital Synthesizer) vorgegeben wird (dynamische Frequenzregelung/bestimmung).

14. Abstandsmeßvorrichtung nach Anspruch 12, **dadurch gekennzeichnet, dass** die Regelschleife aus mindestens einem Frequenzteiler besteht und über einen Frequenzzähler, Mikrocontroller und Digital-Analogwandler geschlossen wird (statische Frequenzregelung/bestimmung).

15. Abstandsmeßvorrichtung nach einem der Ansprüche 7 bis 10, **dadurch gekennzeichnet, dass** der Empfangszweig aus einem Inphase-Quatratur-Detektor besteht.

16. Verfahren zur Bestimmung eines Abstands, insbesondere unter Verwendung einer Abstandsmeßvorrichtung nach einem der Ansprüche 1 bis 15; mit folgenden Schritten

a) Bereitstellen eines Sendesignals, welches über eine Koppelsonde in eine Leitungsstruktur eingeleitet wird;
b) Messung des Abstands zwischen dem von der Koppelsonde definierten Einspeisepunkt und einem vorbestimmten Teil der Leitungsstruktur;
c) Bereitstellen eines frequenzmodulierten Hochfrequenz-Dauerstrichsignals, welches von der Koppelsonde in die Leitungsstruktur eingespeist wird, mit dem kontinuierlich der zu messende Abstand bestimmt wird;
d) Bestimmen des zu messenden Abstandes zwischen dem von der Koppelsonde definierten Einspeisepunkt und dem vorbestimmten Teil der Leitungsstruktur durch eine Laufzeitmessung des Sendesignals.

17. Verfahren nach Anspruch 16, bei dem im Schritt a) ein einmodiges Sendesignals, vorzugsweise im TEM-Mode bei koaxialen Strukturen, verwendet wird.

18. Verfahren nach einem der Ansprüche 16 bis 17, **dadurch gekennzeichnet, dass** als Leitungsstruktur ein Hohlleiter oder eine Koaxialleitung verwendet wird.

19. Verwendung der Abstandsmeßvorrichtung nach einem der Ansprüche 1 bis 15, insbesondere unter Heranziehung des Verfahrens nach einem der Ansprüche 16 bis 18, in einem Zylinderkolben.

20. Verwendung nach Anspruch 19, bei der ein pneumatischer Linearantrieb in Form eines Kolbens herangezogen wird.

21. Verwendung nach Anspruch 19, bei der ein hydraulischer Linearantrieb in Form eines Kolbens herangezogen wird.

22. Verwendung nach Anspruch 21, bei der ein Tauchrohr in einem Tank verwendet wird.

**Claims**

1. Distance measuring device with a sensor device and analysis electronics, with the sensor device comprising at least one coupling probe for feeding a transmission signal into a line structure, **characterized by** the coupling probe feeding in a frequency-modulated high-frequency continuous wave signal to continuously determine the distance, with the measurement performed of the distance between the feeding point defined by the coupling probe and a predetermined part of the line structure provided by a duration measurement of the transmission signal.

2. Distance measuring device according to claim 1, **characterized by** the coupling probe enabling a magnetic or electric coupling or a slot coupling into a hollow conductor or a coaxial line as line structure.

3. Distance measuring device according to claim 1 or 2, **characterized by** an electromagnetic wave within the high-frequency range between 10 MHz to 25 GHz being fed in via the coupling probe.

4. Distance measuring device according to claim 3, **characterized by** the coupled electromagnetic wave having monomodal propagation, preferably in TEM mode with coaxial structures.

5. Distance measuring device according to any one of the claims 1 to 4, **characterized by** the coupling being a singular coupling and/or an axial-symmetrical coupling with several coupling probes.

6. Distance measuring device according to any one of the claims 1 to 5, **characterized by** an adaptation network being provided.

7. Distance measuring device according to any one of the claims 1 to 6, **characterized by** the sensor device comprising high-frequency electronics with a transmission and a receiving branch.

8. Distance measuring device according to any one of the claims 1 to 7, **characterized by** several coupling probes being provided, with one half each of the coupling probes being provided for the transmitter and, respectively, the receiver.

9. Distance measuring device according to claim 8, **characterized by** different types of coupling probes being used for the transmitter antenna intended for the transmitter and for the receiver antenna intended for the receiver.

**10.** Distance measuring device according to any one of the claims 7 to 9, **characterized by** the transmitter branch consisting of an oscillator, preferably a voltage controlled oscillator (VCO).

**11.** Distance measuring device according to any one of the claims 7 to 10, **characterized by** the receiver branch consisting of a mixer or at least four high-frequency diodes.

**12.** Distance measuring device according to claim 10, **characterized by** a closed control loop being provided.

**13.** Distance measuring device according to claim 12, **characterized by** the control loop being a phase locked loop (PLL) and consisting of at least one frequency divider, a phase discriminator and a low-pass filter, and the nominal frequency being specified via a DDS (direct digital synthesizer) (dynamic frequency control/determination).

**14.** Distance measuring device according to claim 12, **characterized by** the control loop consisting of at least one frequency divider and being closed via a frequency counter, micro-controller and digital/analog converter (static frequency control/determination).

**15.** Distance measuring device according to any one of the claims 7 to 10, **characterized by** the receiving branch comprising an in-phase quadrature detector.

**16.** Method for the determination of a distance, especially by using a distance measuring device according to any one of the claims 1 to 15, with the following steps

a) provision of a transmission signal which is introduced via a coupling probe into a line structure;
b) measurement of the distance between the feed-in point defined by the coupling probe and a predetermined part of the line structure;
c) provision of a frequency-modulated high-frequency continuous wave signal which is fed by the coupling probe into the line structure by means of which the distance to be measured is continuously determined;
d) determination of the distance to be measured between the feed-in point defined by the coupling probe and the predetermined part of the line structure by means of a duration measurement of the transmission signal.

**17.** Method according to claim 16, with a single-mode transmission signal being used in step a), preferably in TEM mode with coaxial structures.

**18.** Method according to any one of the claims 16 to 17, **characterized by** a hollow conductor or a coaxial line being used as line structure.

**19.** Use of the distance measuring device according to any one of the claims 1 to 15 in a cylinder piston, especially by using the method according to any one of the claims 16 to 18.

**20.** Use according to claim 19, with a pneumatic linear drive in the form of a piston being used.

**21.** Use according to claim 19, with a hydraulic linear drive in the form of a piston being used.

**22.** Use according to claim 21, with an immersion tube being used in a tank.

**Revendications**

**1.** Dispositif de mesure de distances comportant un dispositif de capteur et une électronique d'exploitation, le dispositif de capteur présentant au moins une sonde de couplage permettant d'apporter un signal de transmission dans une structure de conduite, **caractérisé en ce que** la sonde de couplage applique un signal à ondes continues haute fréquence modulé en fréquence afin de déterminer la distance en continu, la mesure de la distance entre le point d'application défini par la sonde de couplage et une partie prédéterminée de la structure de conduite s'effectuant grâce à la mesure du temps de propagation du signal de transmission.

**2.** Dispositif de mesure de distances selon la revendication 1, **caractérisé en ce que** la sonde de couplage permet un couplage magnétique ou électrique ou un couplage par fente dans un conducteur creux ou une conduite coaxiale comme structure de conduite.

**3.** Dispositif de mesure de distances selon la revendication 1 ou 2, **caractérisé en ce que** la sonde de couplage permet d'appliquer une onde électromagnétique dans la plage de hautes fréquences comprise entre 10 MHz et 25 GHz.

**4.** Dispositif de mesure de distances selon la revendication 3, **caractérisé en ce que** l'onde électromagnétique couplée présente une propagation monomode, de préférence en mode TEM dans le cas de structures coaxiales.

**5.** Dispositif de mesure de distances selon l'une des revendications 1 à 4, **caractérisé en ce que** le couplage consiste en un couplage singulier et/ou un couplage à symétrie axiale comportant plusieurs sondes de couplage.

**6.** Dispositif de mesure de distances selon l'une des revendications 1 à 5, **caractérisé en ce qu'**il est prévu un réseau d'adaptation.

**7.** Dispositif de mesure de distances selon l'une des revendications 1 à 6, **caractérisé en ce que** le dispositif de capteur présente une électronique haute fréquence comportant une branche émission et une branche réception.

**8.** Dispositif de mesure de distances selon l'une des revendications 1 à 7, **caractérisé en ce qu'**il est prévu plusieurs sondes de couplage, la moitié des sondes de couplage étant respectivement prévues pour des émetteurs et des récepteurs.

**9.** Dispositif de mesure de distances selon la revendication 8, **caractérisé en ce qu'**on emploie différents types de sondes de couplage pour l'antenne prévue pour l'émetteur et pour l'antenne prévue pour le récepteur.

**10.** Dispositif de mesure de distances selon l'une des revendications 7 à 9, **caractérisé en ce que** la branche émission consiste en un oscillateur, de préférence en un oscillateur commandé en tension (OCT).

**11.** Dispositif de mesure de distances selon l'une des revendications 7 à 10, **caractérisé en ce que** la branche réception consiste en un mélangeur ou au moins en quatre diodes haute fréquence.

**12.** Dispositif de mesure de distances selon la revendication 10, **caractérisé en ce qu'**il est prévu une boucle de régulation fermée.

**13.** Dispositif de mesure de distances selon la revendication 12, **caractérisé en ce que** la boucle de régulation est une boucle à verrouillage de phase (PLL) et consiste au moins en un diviseur de fréquence, un discriminateur de phase et un filtre passe bas et **en ce que** la fréquence de consigne est indiquée via un DDS (Direct Digital Synthesizer - synthétiseur numérique direct) (régulation/détermination dynamique de la fréquence).

**14.** Dispositif de mesure de distances selon la revendication 12, **caractérisé en ce que** la boucle de régulation consiste au moins en un diviseur de fréquence et est fermée via un compteur de fréquence, un microcontrôleur et un convertisseur numérique-analogique (régulation/détermination statique de la fréquence).

**15.** Dispositif de mesure de distances selon l'une des revendications 7 à 10, **caractérisé en ce que** la branche réception consiste en un détecteur en quadrature de phase.

**16.** Procédé permettant de déterminer une distance, notamment en ayant recours au dispositif de mesure de distances selon l'une des revendications 1 à 15, comportant les étapes suivantes consistant à :

a) fournir un signal de transmission qui est conduit via une sonde de couplage dans une structure de conduite ;
b) mesurer la distance séparant le point d'application défini par la sonde de couplage et une partie prédéterminée de la structure de conduite ;
c) fournir un signal à ondes continues haute fréquence modulé en fréquence qui est appliqué par la sonde de couplage dans la structure de conduite, à l'aide duquel la distance à mesurer est déterminée en continu ;
d) déterminer la distance à mesurer entre le point d'application défini par la sonde de couplage et une partie prédéterminée de la structure de conduite grâce à la mesure du temps de propagation du signal de transmission.

**17.** Procédé selon la revendication 16, dans lequel on utilise dans l'étape a) un signal de transmission monomode, de préférence en mode TEM dans le cas de structures coaxiales.

**18.** Procédé selon l'une des revendications 16 à 17, **caractérisé en ce qu'**on emploie un conducteur creux ou une conduite coaxiale comme structure de conduite.

**19.** Utilisation du dispositif de mesure de distances selon l'une des revendications 1 à 15, faisant notamment appel au procédé selon l'une des revendications 16 à 18, dans le piston d'un cylindre.

**20.** Utilisation selon la revendication 19, dans laquelle on fait appel à un entraînement linéaire pneumatique sous la forme d'un piston.

**21.** Utilisation selon la revendication 19, dans laquelle on fait appel à un entraînement linéaire hydraulique sous la forme d'un piston.

**22.** Utilisation selon la revendication 21, dans laquelle on emploie un tube plongeant dans un réservoir.

Fig. 1

EP 1 040 316 B1

# Fig. 2

# Fig. 3

ohne Anpaßnetzwerk

mit Anpaßnetzwerk

Frequenz 0.5 GHz/DIV

# Fig. 4

# Fig. 5a

# Fig. 5b

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9301470 A

**In der Beschreibung aufgeführte Nicht-Patentliteratur**

- Skolnik, Introduction to Radar Systems. McGraw-Hill, 1981, 82-87